(19) Europäisches Patentamt / European Patent Office / Office européen des brevets

(11) **EP 4 065 333 B1**

(12) **FASCICULE DE BREVET EUROPEEN**

(45) Date de publication et mention de la délivrance du brevet:
**26.07.2023 Bulletin 2023/30**

(21) Numéro de dépôt: **20800947.2**

(22) Date de dépôt: **09.11.2020**

(51) Classification Internationale des Brevets (IPC):
*B29C 48/10* (2019.01)    *B29C 48/92* (2019.01)
*B29C 55/28* (2006.01)    *B29C 48/32* (2019.01)

(52) Classification Coopérative des Brevets (CPC):
**B29C 48/10; B29C 48/32; B29C 48/92;**
**B29C 55/28;** B29C 48/0018; B29C 2948/92152;
B29C 2948/92438; B29C 2948/92447;
B29C 2948/92647

(86) Numéro de dépôt international:
**PCT/EP2020/081488**

(87) Numéro de publication internationale:
**WO 2021/104841 (03.06.2021 Gazette 2021/22)**

(54) **PROCEDE DE FABRICATION D'UN FILM SOUFFLE AVEC DETERMINATION DE PROFIL D'UNE GRANDEUR CARACTERISTIQUE DU FILM**

VERFAHREN ZUM HERSTELLEN EINER BLASFOLIE MIT BESTIMMUNG DES PROFILS EINER CHARAKTERISTISCHEN MENGE DER FOLIE

METHOD FOR MANUFACTURING A BLOWN FILM WITH DETERMINATION OF THE PROFILE OF A CHARACTERISTIC QUANTITY OF THE FILM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.11.2019 FR 1913386**

(43) Date de publication de la demande:
**05.10.2022 Bulletin 2022/40**

(73) Titulaire: **Aleph**
**73290 La Motte-Servolex (FR)**

(72) Inventeur: **AVILA, Jean-Noël**
**73000 Chambéry (FR)**

(74) Mandataire: **IP Trust**
**2, rue de Clichy**
**75009 Paris (FR)**

(56) Documents cités:
EP-A2- 0 307 076    WO-A2-2016/189518
IT-A1- MI20 071 963    JP-A- H09 225 995
US-A- 3 474 160    US-A1- 2011 112 677

**Description**

Domaine technique

L'invention concerne un procédé fabrication d'un film soufflé incluant une mesure de profil d'une grandeur caractéristique du film réalisée en cours de fabrication.

Technique antérieure

Comme décrit dans WO 2016/189518 A2 et JP H09 225995 A, les films soufflés sont des films tubulaires produits par extrusion de matière plastique à travers une filière annulaire.

En sortie de filière, de l'air est insufflé du centre de la filière, mettant le tube sous pression et l'étirant, celui-ci formant alors une bulle qui est par la suite aplatie par pliage au moyen d'un panneau de repliement de manière à obtenir une structure bicouche d'épaisseur en moyenne double de celle de la paroi de la bulle, le film étant ensuite enroulé pour former une bobine.

Afin d'éviter qu'un défaut d'épaisseur prenant naissance à la sortie de la filière et lors de l'expansion ne se retrouve accumulé à une position transversale donnée de la bobine, un organe de génération de rotation, tel que la filière annulaire ou le panneau de repliement, suit un mouvement de rotation et impose cette rotation à la position de pliage du film repérée par un angle dit angle de pliage, de sorte que le défaut d'épaisseur est réparti de façon régulière sur la bobine.

La rotation peut être une rotation continue ou une rotation pendulaire (rotation dans un sens puis dans l'autre, de manière cyclique).

Un contrôle de l'épaisseur du film reste cependant nécessaire, afin de caractériser le film obtenu et éventuellement pour pouvoir agir sur le procédé de fabrication du film.

Il est en pratique difficile de mesurer précisément l'épaisseur du film soufflé au niveau de la bulle, la géométrie du système rendant impossible une mesure par transmission car un élément du capteur devrait alors se trouver à l'intérieur de la bulle, et les solutions de mesure par rétrodiffusion étant peu précises.

En conséquence, des procédés d'estimation de l'épaisseur du film après aplatissement de la bulle ont été développés, reposant sur une mesure d'épaisseur de la bulle après son aplatissement.

Ainsi, la demande de brevet US 2011/0112677 décrit un procédé de mesure de profil d'épaisseur d'un film bulle dans lequel on identifie des sections longitudinales du film sur la bulle, on mesure les sommes des épaisseurs de paires de sections longitudinales juxtaposées l'une à l'autre par l'aplatissement du film, puis on met à profit la rotation de la filière pour reconstituer un profil d'épaisseur du film sur l'ensemble de la circonférence de la bulle.

En effet, la rotation de la filière fait que la mesure d'épaisseur du film aplati à différents moments correspond à des sommes d'épaisseurs de différentes combinaisons des sections longitudinales, ce qui permet d'établir un système d'équations linéaires qu'il suffit de résoudre pour déterminer un profil d'épaisseur du film sur sa circonférence.

Cependant, ce type de procédé, reposant sur un système de « buckets » ou liste de sections de profil, amène à une incertitude concernant le degré de recouvrement des sections, à un lissage du profil d'épaisseur lié à la division du film en sections longitudinales, à une résolution du profil insuffisante en raison du moyennage des épaisseurs mesurées sur chacune des sections, et en outre à une part non négligeable de mesures de profils non utilisées afin d'éviter les artefacts de mesure dus aux raccords entre les sections situées sur les bords du film.

Exposé de l'invention

Un objectif de l'invention est d'améliorer l'estimation d'un profil d'une grandeur caractéristique d'un film soufflé, en particulier au niveau de la résolution de la mesure et de son niveau de bruit, et ainsi pouvoir opérer un meilleur contrôle sur le procédé de fabrication de ce film.

A cet effet, l'invention a pour objet un procédé de fabrication d'un film bulle au moyen d'un appareillage de formation de film, procédé comprenant une étape de formation du film bulle par extrusion à travers une filière, une étape d'aplatissement du film bulle à un angle de pliage variant par entraînement d'un organe de génération de rotation, une étape de mesure d'un profil transversal d'une grandeur additive caractéristique du film bulle qui est sommée sur deux portions juxtaposées d'une paroi du film bulle aplati, une étape d'estimation d'un profil polaire discrétisé de ladite grandeur additive caractéristique du film bulle sur la base du profil transversal, et une étape de commande de l'appareillage de formation de film en réponse à l'estimation du profil polaire discrétisé du film bulle, dans lequel, pour chaque point de mesure du profil transversal, dans le système de mesure :

- on acquiert une position angulaire de l'organe de génération de rotation ;
- à partir de cette position angulaire, et pour une position transversale du point de mesure concerné, on détermine deux positions polaires de la périphérie du film bulle aplati qui se situent à cette position transversale ;

- pour chacune des deux positions polaires, on détermine deux valeurs d'angles discrétisées encadrant la position polaire considérée ; et
- à partir desdites valeurs d'angles discrétisées, on calcule des coefficients d'interpolation qui lient un profil polaire du film audit profil polaire discrétisé du film ; et dans lequel
- à partir desdits coefficients d'interpolation, on détermine une matrice d'observation d'un filtre de Kalman principal ; et
- on fait une mise à jour de l'estimation du profil polaire discrétisé du film au moyen de ce filtre de Kalman principal, dans lequel on entre le profil transversal acquis à l'étape de mesure.

Le procédé de fabrication d'un film bulle selon l'invention comprend la détermination et la mise à jour d'un profil polaire d'une grandeur caractéristique du film à partir de profils transversaux de cette grandeur caractéristique, profils mesurés en succession sur le film bulle aplati.

Ce procédé permet une haute réactivité d'une boucle de rétroaction de commande de formation du film, basée sur une détermination robuste d'un profil estimé avec une haute résolution et une excellente fiabilité.

Le procédé de fabrication selon l'invention peut présenter les particularités suivantes :

- pour une première itération du filtre de Kalman principal, on peut initialiser le profil polaire discrétisé par un profil plat présentant une valeur constante valant une moitié de ladite grandeur additive caractéristique sommée moyennée sur un profil transversal mesuré ;
- pour une première itération du filtre de Kalman principal, on peut initialiser le profil polaire discrétisé par un profil de composantes chacune définies comme une moitié d'une valeur d'un premier profil transversal mesuré à une position transversale la plus proche d'une position polaire discrète de la composante considérée ;
- en réponse à la mise à jour de l'estimation du profil polaire discrétisé du film, on peut commander des actuateurs de régulation de formation du film bulle ;
- la rotation peut être une rotation pendulaire, et, dans le procédé, on peut estimer deux profils polaires discrétisés de la grandeur additive caractéristique du film bulle en parallèle à partir d'une pluralité de profils transversaux de la grandeur additive caractéristique acquis par mesures sur le film bulle, un profil polaire discrétisé pour chaque sens de rotation, en utilisant deux filtres de Kalman auxiliaires chacun dédié à l'un de ces deux profils polaires, selon le procédé ci-dessus, on peut calculer une courbe d'intercorrélation de ces deux profils polaires, on peut déterminer une position du maximum de cette courbe d'intercorrélation que l'on divise par deux pour obtenir un décalage angulaire de correction, et on peut déterminer la mise à jour de l'estimation du profil polaire discrétisé du film en alimentant ledit filtre de Kalman principal avec le profil transversal corrigé ; et
- ladite grandeur additive caractéristique est une épaisseur, ledit profil polaire étant un profil polaire d'épaisseur du film et ledit profil polaire discrétisé un profil polaire discrétisé d'épaisseur du film.

Description sommaire des dessins

La présente invention sera mieux comprise et d'autres avantages apparaîtront à la lecture de la description détaillée du mode de réalisation pris à titre d'exemple nullement limitatif et illustré par les dessins annexés, dans lesquels :

- la figure 1 illustre un procédé de formation d'un film bulle et de son pliage ;
- la figure 2A illustre dans un même plan des sections du film à plusieurs niveaux de la figure 1 ;
- la figure 2B illustre le repérage des positions sur le film replié de la figure 1 ;
- la figure 2C illustre une interpolation d'un point d'un profil polaire du film de la figure 1 dans le cadre d'une discrétisation ;
- la figure 3A illustre un tableau de valeurs utilisé pour la détermination d'un profil polaire d'épaisseur du film de la figure 1 ;
- la figure 3B est un tableau définissant le profil polaire du film de la figure 1 ;
- la figure 4 représente un diagramme du procédé de fabrication du film de la figure 1 selon un premier mode de mise en œuvre de l'invention ;
- la figure 5A illustre deux profils polaires d'un film, chacun obtenu pour un sens de rotation différent de la filière ;
- la figure 5B illustre une courbe d'intercorrélation des profils de la figure 5A ; et
- la figure 6 représente un diagramme du procédé de fabrication du film de la figure 1 selon un deuxième mode de mise en œuvre de l'invention.

Description d'un premier mode de mise en oeuvre du procédé selon l'invention

Dans ce premier mode de mise en oeuvre, on considère un procédé de fabrication d'un film bulle au moyen d'une filière en rotation continue au cours duquel une grandeur caractéristique additive du film bulle est contrôlée, ici l'épaisseur.

Dans une première partie, nous allons décrire un système de collecte de données utilisées dans la mise en œuvre du procédé de détermination d'un profil polaire du film bulle.

Ici, le profil polaire associe une épaisseur du film bulle à chaque point de sa périphérie, chaque point étant repéré par sa position polaire.

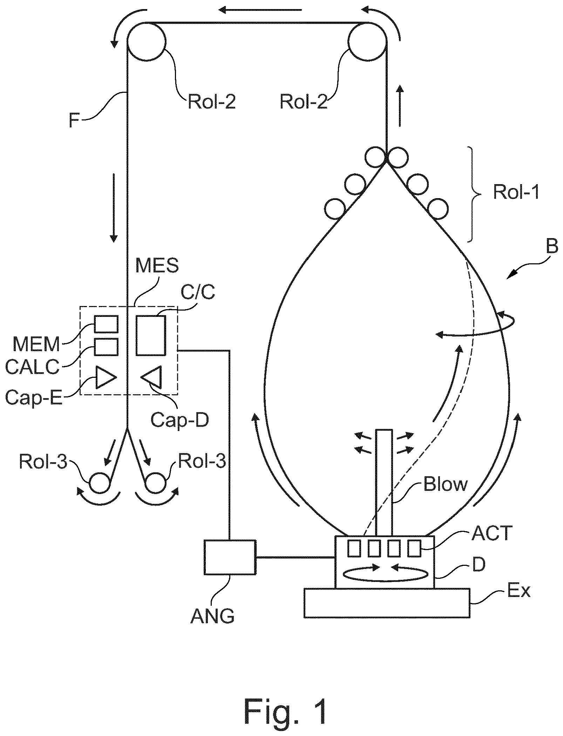

La figure 1 illustre un procédé de formation d'un film bulle, dans laquelle on forme un film bulle F tubulaire au moyen d'une extrudeuse Ex par extrusion à travers une filière D qui est en rotation pendulaire ou continue et qui est équipée d'un dispositif de soufflage Blow insufflant de l'air sous pression dans le film, formant ainsi une bulle B.

L'extrusion du polymère formant le film se fait ici par poussée entre une lèvre fixe et une lèvre réglable de la filière, l'épaisseur du film extrudé étant contrôlable par des actuateurs ACT répartis le long de la lèvre réglable, sur le pourtour de la filière, et dont l'action peut être ajustée individuellement.

D'autres méthodes de contrôle de l'épaisseur du film existent, reposant sur d'autres actuateurs de régulation d'épaisseur du film bulle, tels des actuateurs de contrôle d'un anneau d'air dont on fait varier le débit ou la température, et des actuateurs de contrôle de panneaux chauffant le film bulle par rayonnement infrarouge.

Au-dessus de la filière, des rouleaux Rol-1 aplatissent le film, et des rouleaux Rol-2 entraînent et redirigent le film aplati de manière à ce qu'il passe entre un dispositif Cap-E d'émission d'un rayonnement et un dispositif Cap-D de détection de ce rayonnement, ces deux dispositifs constituant un capteur d'épaisseur Cap fonctionnant de préférence par transmission et mesurant une grandeur additive caractéristique du film.

Cette grandeur additive pourrait être une masse surfacique du film dans son ensemble, une masse surfacique d'un composant du film ou encore une masse surfacique d'une couche faisant partie du film lorsque celui-ci est un film multicouche.

Dans ce mode de mise en oeuvre, la grandeur caractéristique considérée est l'épaisseur de la paroi du film bulle, déduite de la masse surfacique du film pris dans son ensemble.

Par la suite, on entend par épaisseur simple du film l'épaisseur d'une seule paroi du film, et on entend par épaisseur sommée la somme des épaisseurs de deux portions de la paroi du film aplati qui sont juxtaposées l'une à l'autre par l'aplatissement.

Le capteur d'épaisseur est conçu pour mesurer un profil transversal de l'épaisseur sommée du film et peut être basé sur la détection de masse surfacique, par transmission d'un rayonnement X à travers le film aplati.

Alternativement, le capteur d'épaisseur pourrait être basé, sur la transmission ou la rétrodiffusion d'un rayonnement bêta.

D'une manière générale, les mesures d'épaisseur peuvent être faites en transmission ou en rétrodiffusion de rayonnements électromagnétiques, d'ultrasons ou de particules, mais une détection par transmission est préférable pour des questions de précision de la mesure.

Le capteur d'épaisseur est intégré dans un système de mesure MES, qui comprend en outre un calculateur CALC, une mémoire informatique MEM et un scanner (non représenté) capable de balayer le capteur d'épaisseur sur la largeur du film replié sur ordre d'un système de contrôle/commande C/C.

Le système de contrôle/commande C/C est en outre en communication fonctionnelle avec le calculateur CALC, et est configuré pour contrôler le système de fabrication du film qui inclut le dispositif de soufflage, la filière et les actuateurs.

Le système de mesure MES est en communication avec un indicateur d'angle ANG, conçu pour lui transmettre à chaque instant une position angulaire de la filière en rotation de manière à ce que le système de mesure soit apte à acquérir cette position angulaire.

La rotation de la filière assure la rotation de la position de pliage du film, la filière en rotation jouant ici le rôle d'organe de génération de rotation.

Si la rotation de la position de pliage du film était assurée par un panneau de repliement, il s'agirait de la position angulaire du panneau en rotation.

En aval du système de mesure, le film est découpé en deux moitiés qui sont alors respectivement bobinées autour de deux rouleaux Rol-3 de bobinage.

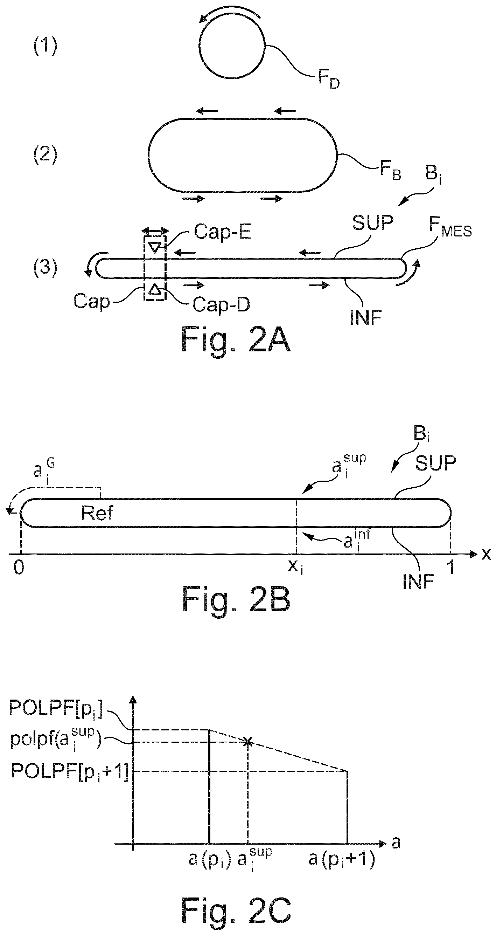

La figure 2A illustre en (1) une section $F_D$ du film en sortie de la filière D, en (2) une section $F_B$ du film au niveau d'une section partiellement aplatie de la bulle B, et en (3) une section $F_{MES}$ du film au niveau du système Mes de mesure.

En pratique, en (3), deux portions en vis-à-vis du film bulle entrent en contact l'une avec l'autre, éventuellement séparées d'une fine couche d'air résiduelle, formant ainsi une structure bicouche Bi.

Pour des raisons de clarté, ces parties sont représentées séparées l'une de l'autre sur la figure.

Le mouvement de rotation de la filière se propage à l'ensemble du film jusqu'aux rouleaux de bobinage, portion traversant le système de mesure incluse.

Selon l'invention, au cours de la formation de la bulle et sous contrôle du dispositif de contrôle/commande C/C, le système de mesure balaie le capteur d'épaisseur transversalement sur la largeur du film aplati et enregistre successivement des profils transversaux d'épaisseur de la structure bicouche Bi formée par le film aplati dans la mémoire informatique MEM, l'épaisseur sommée $CT_i$ mesurée d'un point d'un profil transversal courant repéré par un indice i étant stocké à la ligne i d'une deuxième colonne d'un tableau dont la première colonne indique l'indice 1.

En parallèle, pour chaque mesure d'épaisseur de la structure bicouche à un point i du profil transversal courant, le détecteur d'angle enregistre, à la ligne i d'une troisième colonne du tableau, une position angulaire $\alpha_i$ de la filière à l'instant de la mesure d'épaisseur de la structure bicouche à un point i de ce profil transversal courant.

La figure 2B illustre la position angulaire $\alpha_i^\Gamma$ de pliage, qui correspond à l'angle entre une position angulaire de référence Ref de la filière et un point de pliage de la bulle, la position 0° étant définie par une correspondance exacte entre la position de référence et la point de pliage de la bulle lors d'une absence de rotation.

La position angulaire $\alpha_i^\Gamma$ de pliage se déduit de la position angulaire $\alpha_i$ de la filière en tenant compte du retard temporel correspondant au temps de transfert du film de la filière au dispositif de mesure ainsi que de la déformation de la bulle liée à son inertie puis est stocké dans un quatrième colonne du tableau.

Ces paramètres peuvent être mesurés et/ou être estimés à partir des paramètres de fonctionnement de la chaîne de production utilisée pour mettre en œuvre le procédé.

En pratique, dans le cas d'une rotation continue dans laquelle le sens de rotation est constant, on soustrait à la position angulaire $\alpha_i$ le décalage angulaire $\alpha_{shift}$ engendré par le décalage temporel mentionné ci-dessus et la rotation de la filière afin d'obtenir la position angulaire $\alpha_i^\Gamma$ de pliage.

Dans le cas d'une rotation pendulaire dans laquelle le sens de rotation change périodiquement, le décalage angulaire $\alpha_{shift}$ est ajouté ou soustrait selon le sens de rotation au moment de la mesure, de manière à compenser le retard temporel.

La figure 2B illustre également le repérage d'une position sur le film au niveau du système Mes de mesure, avec une position transversale du film repliée repérée par une coordonnée x normalisée comprise entre 0 et 1, ces valeurs extrêmes correspondant aux bords repliés du film aplati.

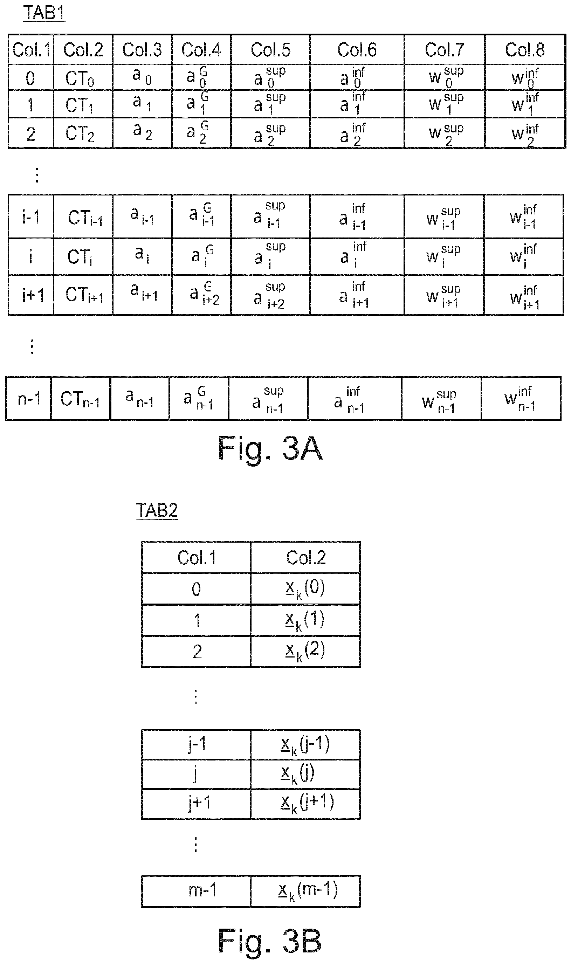

La figure 3A illustre l'enregistrement des données d'épaisseur et d'angle pour n points de mesure, dans un tableau TAB1 dont les lignes sont repérées par un indice i indiqué en première colonne Col.1, la deuxième colonne Col. 2 indiquant les valeurs mesurées d'épaisseur de la structure bicouche Bi, la troisième colonne Col.3 indiquant les positions angulaires de la filière au moment de la mesure d'épaisseur et la quatrième colonne Col.4 indiquant les positions angulaires du film aux moments des mesures d'épaisseur respectives au niveau du capteur d'épaisseur.

Dans une seconde partie, nous allons expliquer l'établissement des relations entre les épaisseurs simples du film bulle à chaque position angulaire de ce film et les mesure d'épaisseur sommée du film à chaque position transversale du film aplati.

A chaque position transversale x du film aplati correspondent deux positions polaires $\alpha^{sup}$ et $\alpha^{inf}$ de la périphérie du film tubulaire, respectivement dans une couche supérieure SUP et dans une couche inférieure INF du film replié, juxtaposées l'une à l'autre par l'aplatissement du film, comme illustré par la figure 2B.

Ces deux positions polaires $\alpha^{sup}$ et $\alpha^{inf}$ s'expriment en angles compris entre 0° et 360°, en fonction de la position transversale x correspondante et de la position angulaire $\alpha^\Gamma$ de pliage, respectivement selon les équations (Eq.1) et (Eq.2).

$$\alpha^{sup} = x \times 180° - \alpha^\Gamma (modulo\ 360°) \qquad (\text{Eq.1})$$

$$\alpha^{inf} = (2-x) \times 180° - \alpha^\Gamma (modulo\ 360°) \qquad (\text{Eq.2})$$

On peut exprimer une épaisseur sommée du film à une position transversale x par la somme de deux épaisseurs simples des deux positions polaires correspondantes $\alpha^{sup}$ et $\alpha^{inf}$ au moyen de l'équation (Eq.3)

$$flatpf(x) = polpf(\alpha^{sup}) + polpf(\alpha^{inf}) \qquad (\text{Eq.3})$$

où la fonction *polpf* associe l'épaisseur simple du film bulle à chaque position polaire de ce film et la fonction *flatpf* associe une mesure en épaisseur sommée du film à chaque position transversale du film aplati.

Afin d'établir un système d'équations linéaires dont la résolution permet de passer des épaisseurs sommées mesurées aux épaisseurs simples recherchées, les fonctions *flatpf* et *polpf* sont discrétisées.

Nous utilisons un nombre m de positions polaires repérées par un indice j entier variant de 0 à m-1.

Pour exemple, si m est fixé à 500, on obtient un profil polaire d'épaisseur sur 360° de 0,72° de résolution

angulaire $\Delta\alpha$, chaque angle discret valant le produit de son indice *j* par $\Delta\alpha$.

Ainsi, on a m=500 relations *POLPF[j]=polpf*($\alpha_j$) où une position polaire discrète $\alpha_j$ vaut $j{\times}\Delta\alpha$ et la résolution angulaire $\Delta\alpha$ vaut *360°/m,* POLPF représentant une discrétisation de la fonction *polpf* sur m points.

Lors de la mesure de l'épaisseur sommée du film aplati au moyen du système de mesure, on obtient un échantillonnage régulier *FLATPF* de la fonction *flatpf* à *n* points de mesures.

Les tailles des discrétisations *POLPF* et *FLATPF* sont définies respectivement par *m* et *n.*

*FLATPF* se visualise au moyen des colonnes Col.1 et Col.2 du tableau TAB1 de la figure 3A, indiquant respectivement l'indice *i* et l'épaisseur sommée $CT_i$ correspondant à chaque point de mesure.

Si *n* est fixé par exemple à 2500, on a n=2500 relations *FLATPF[i]=flatpf (Xi)* où une position transversale normalisée discrète $x_i$ *vaut* $i{\times}\Delta x$ et $\Delta x$ vaut *1/n,* l'indice *i entier* variant de 0 à *(n-1),* indiquant les points de mesure.

Il est à noter que le nombre *n* de valeurs de l'échantillonnage de *flatpf* peut être beaucoup plus grand que le nombre *m* de l'échantillonnage de *polpf,* ce qui assure une plus grande précision et une meilleure fiabilité dans la détermination du profil polaire, par exemple entre 2 et 10 fois plus grand, de préférence entre 4 et 8 fois plus grand.

Afin de convertir la relation entre les fonctions *polpf* et *flatpf* en une relation entre les discrétisations *POLPF* et *FLATPF,* on établit, pour chaque point *i* de mesure de position transversale normalisée $x_i$, une relation d'approximation de la valeur de *polpf* au niveau de la position polaire $\alpha_i^{sup}$ correspondante à partir des positions polaires discrètes adjacentes $\alpha(p_i)$ et $\alpha(p_i + 1)$ entre lesquelles cette valeur de $\alpha_i^{sup}$ est située.

De la même manière, on procède à une approximation de valeur de *polpf* au niveau de la position polaire $\alpha_i^{inf}$ correspondante en fonction des positions polaires discrètes adjacentes $\alpha(q_i)$ et $\alpha(q_i + 1)$ entre lesquelles cette valeur de $\alpha_i^{inf}$ est située.

Les indices pi et qi sont des entiers compris entre 0 et (m-1) qui lient les deux angles discrets immédiatement inférieurs aux positions angulaires $\alpha_i^{sup}$ et $\alpha_i^{inf}$ par les relations $p_i \times \Delta\alpha$ et $q_i \times \Delta\alpha$, respectivement.

Ainsi, pour une position polaire $\alpha_i^{sup}$ correspondant à une position transversale $x_i$, on considère une approximation de $polpf(\alpha_i^{sup})$ sur la base de *POLPF[pi]* et *POLPF[pi+1], pi* identifiant l'angle discret $\alpha(p_i)$ immédiatement inférieur à $\alpha_i^{sup}$, comme illustré par la figure 2C.

Par exemple, la position polaire $\alpha_i^{sup}$ valant 1,22° est comprise entre les valeurs angulaires discrètes adjacentes 0,72° et 1,44° avec *p* valant 1 et *m* valant 500.

On procède de la même manière pour la position polaire $\alpha_i^{inf}$.

Dans ce mode de réalisation, les approximations se font par une approximation linéaire au premier ordre selon les équations (Eq.4) et (Eq.5) suivantes

$$polpf(\alpha_i^{sup}) = w_i^{sup} \times POLPF[p_i] + \left(1 - w_i^{sup}\right) \times POLPF[p_i + 1] \qquad (\mathrm{Eq.4})$$

$$polpf(\alpha_i^{inf}) = w_i^{inf} \times POLPF[q_i] + \left(1 - w_i^{inf}\right) \times POLPF[q_i + 1] \qquad (\mathrm{Eq.5})$$

où les coefficients $w_i^{sup}$ et $w_i^{inf}$ représentent les poids relatifs respectifs de *POLPF[pi]* et *POLPF[qi]* et s'expriment respectivement par les équations (Eq.6) et (Eq.7) ci-dessous.

$$w_i^{sup} = i - \frac{\alpha_i^{sup}}{\Delta\alpha} + 1 \qquad (\mathrm{Eq.6})$$

$$w_i^{inf} = i - \frac{\alpha_i^{inf}}{\Delta\alpha} + 1 \qquad (\text{Eq.7})$$

Pour les cas où pi et/ou qi prennent la valeur *(m-1),* on assigne à (pi+1) et/ou (qi+1) la valeur 0, respectivement.

L'approximation est ici une interpolation linéaire au premier ordre, mais un autre type d'approximation pourrait être employé, tant que les épaisseurs simples du film aux positions polaires $\alpha_i^{sup}$ et $\alpha_i^{inf}$ sont exprimées en fonction d'épaisseurs simples du film à des positions polaires discrétisées.

Des équations précédentes, on tire l'équation (Eq.8), qui lie la discrétisation *POLPF* et la discrétisation *FLATPF* au moyen d'un système de n équations linéaires.

$$FLATPF[i] = w_i^{sup} \times POLPF[p_i] + \left(1 - w_i^{sup}\right) \times POLPF[p_i + 1]$$

$$+ w_i^{inf} \times POLPF[q_i] + \left(1 - w_i^{inf}\right) \times POLPF[q_i + 1] \qquad (\text{Eq.8})$$

Cette méthode de liaison des épaisseurs simples recherchées avec les épaisseurs sommées mesurées possède plusieurs avantages.

Tout d'abord, elle permet de prendre en compte n'importe quelle forme de mouvement de la filière, ainsi que l'évolution de l'angle de pliage du film durant un balayage du capteur d'épaisseur sur une largeur du film, à partir du moment où l'on est capable de déterminer de manière précise le trajet d'un point de ce film entre la filière et le système de mesure.

Ensuite, contrairement aux méthodes basées sur une liste de sections de profil, on peut générer autant d'équations que de points de mesures, indépendamment du nombre de points de discrétisation choisi pour le profil polaire et donc de sa résolution, sans risque de défaut de recouvrement entre des sections.

Cette méthode permet en outre de définir des équations sur un sous-ensemble de *FLATPF,* en excluant par exemple une zone de mesures de faible qualité en raison d'un bruit trop important qui risquerait de fausser les résultats.

Dans une troisième partie, nous allons détailler l'application d'un filtre de Kalman à la détermination du profil polaire du film bulle.

D'une manière générale, un tel filtre affine une estimation de l'état caché d'un système linéaire dynamique de manière itérative à chaque nouvelle observation de ce système, apportée sous la forme de mesures de ce système, et repose donc sur la combinaison d'une modélisation de l'évolution du système et d'une modélisation de l'observation de ce système.

Dans le formalisme d'un filtre de Kalman appliqué au procédé selon l'invention, exprimé sous la forme d'un calcul matriciel, le vecteur de l'état caché $\underline{x}_k$ du système est le profil polaire recherché correspondant à *POLPF,* et le vecteur de l'observation $\underline{y}_k$ du système représente le profil transversal mesuré correspondant à *FLATPF,* à une itération d'observation *k,* ces deux vecteurs s'exprimant au moyen des deux équations d'état générales (Eq.9) et (Eq.10), respectivement.

Les vecteurs $\underline{x}_k$ et $\underline{y}_k$ ont donc des tailles égales aux tailles de *POLPF* et *FLATPF,* soit *m* et *n,* respectivement.

L'équation (Eq.9) modélise l'évolution de l'état caché du système :

$$\underline{x}_{k+1} = F_k \cdot \underline{x}_k + \Gamma_k \cdot \underline{u}_k + G_k \cdot \underline{w}_k \qquad (\text{Eq.9})$$

où $F_k$ est une matrice qui représente une modélisation de l'évolution spontanée de l'état caché du système, $\underline{u}_k$ le profil d'actions connues sur les systèmes de régulation d'épaisseur du film de la ligne de production, $\Gamma_k$ la matrice d'influence des zones du système de régulation sur le profil polaire, $\underline{w}_k$ le vecteur inconnu des évolutions non anticipées de l'état caché, et $G_k$ la matrice d'impact des évolutions non anticipées sur l'état caché du système.

L'équation (Eq.10) modélise l'observation du système :

$$\underline{y}_k = H_k \cdot \underline{x}_k + D_k \cdot \underline{u}_k + \underline{v}_k \qquad (\text{Eq.10})$$

où $H_k$ est une matrice dite matrice d'observation qui relie l'état caché $\underline{x}_k$ à l'observation $\underline{y}_k,$ $D_k$ une matrice qui représente l'influence des actions sur l'observation, et $\underline{v}_k$ un vecteur qui représente un bruit de mesure de caractéristiques connues pour l'appareil de mesure et les variations transitoires du profil polaire.

Selon l'invention, le système considéré est l'appareillage de fabrication et de caractérisation du film bulle, ainsi que le film bulle lui-même.

Dans ce cadre, les grandeurs génériquement décrites ci-dessus sont adaptées au procédé de production de film bulle, comme expliqué ci-dessous pour ce mode de réalisation.

L'état caché $\underline{x}_k$ est un vecteur recherché de taille m dont chaque coordonnée exprime l'épaisseur simple du film tubulaire à une position polaire donnée du profil polaire, et représente la fonction *polpf.*

Dans le contexte de cette mise en œuvre, l'état caché $\underline{x}_k$ se ramène à la discrétisation *POLPF.*

La matrice $F_k$ est la matrice identité *I* car on considère le profil polaire de la bulle stable dans le temps, c'est-à-dire qu'elle est conservée à l'identique d'une itération sur l'autre en l'absence de perturbations.

Le vecteur $\underline{u}_k$ représente les actions sur les actuateurs de la ligne de production (régulateurs de filière tels des boulons chauffant, anneau d'air, panneaux infra-rouge) et sa taille correspond au nombre d'actuateurs pris en compte, par exemple le nombre d'actuateurs sur le pourtour du film tubulaire ; $\underline{u}_k$ est par exemple un vecteur de taille 30 si la bulle est régulée en 30 zones sur sa circonférence, chaque zone accueillant un actuateur.

Chaque coordonnée de ce vecteur peut par exemple représenter un pourcentage de l'ouverture des buses soufflantes réparties autour d'un anneau d'air.

La matrice $\Gamma_k$ représente l'influence des zones d'actuateurs sur le profil polaire, c'est une matrice dont la construction combine les effets de l'influence des actuateurs entre eux (proximité d'action) avec l'effet de sous-échantillonnage qu'ont les actuateurs par rapport aux points du profil polaire.

Les éléments composant cette matrice peuvent par exemple être déterminés expérimentalement, traduisant la variation d'épaisseur simple du film à un point donné du profil polaire en réponse à un pourcentage d'ouverture appliqué à un actuateur donné lorsque celui-ci est une buse soufflante.

Le vecteur $\underline{w}_k$ est un vecteur aléatoire, par exemple un bruit blanc centré.

La matrice $\overline{G}_k$ est simplifiée dans le procédé en l'identité I.

L'observation $\underline{y}_k$ est un vecteur de taille n dont chaque coordonnée exprime l'épaisseur mesurée de la structure bicouche à une position transversale donnée du film aplati, et représente la fonction *flatpf.*

Dans le contexte de cette mise en oeuvre, l'observation $\underline{y}_k$ se ramène à la discrétisation *FLATPF.*

La matrice $H_k$ est une matrice de taille $m \times n$ représentant le système d'équations linéaires de l'équation (Eq. 8), exprimant *FLATPF* en fonction de *POLPF.*

Le vecteur $\underline{v}_k$ est un vecteur aléatoire, par exemple un bruit blanc centré.

Ainsi, dans ce mode de réalisation de l'invention, les équations d'états (Eq.9) et (Eq.10) du système se simplifient en équations d'état (Eq.11) et (Eq.12), respectivement.

$$\underline{x}_{k+1} = \underline{x}_k + \Gamma_k \cdot \underline{u}_k + \underline{w}_k \qquad \texttt{(Eq.11)}$$

$$\underline{y}_k = H_k \cdot \underline{x}_k + \underline{v}_k \qquad \texttt{(Eq.12)}$$

L'application du filtre de Kalman aux équations d'états (Eq.11) et (Eq.12) décrivant le système permet d'estimer l'évolution de ce dernier, et donc de déterminer le profil polaire d'épaisseur du film bulle ainsi que son évolution.

A cette fin, on procède à des calculs de mise à jour de différentes grandeurs à la suite de chaque itération de mesure de profil : la matrice de covariance de l'erreur d'estimation $P_{k|k-1}$ de $\underline{x}_k$ ; l'estimateur $\hat{\underline{x}}_{k|k-1}$ de $\underline{x}_k$ au rang *k,* connaissant les informations à l'itération *(k-1)* ; l'estimateur $\hat{\underline{x}}_{k|k}$ de $\underline{x}_k$ au rang *k,* connaissant les informations à l'itération *k* ; l'erreur de prédiction $\hat{\underline{\varepsilon}}_{k|k-1}$ valant $\underline{y}_k - H_k \cdot \underline{x}_{k|k-1}$ à l'itération *k* connaissant les informations à l'itération *(k-1),* et dont la matrice de covariance est $R_k^{\varepsilon}$ .

L'application du filtre de Kalman au système défini ci-dessus amène aux étapes de calcul correspondant respectivement aux équations (Eq.13) à (Eq.19) suivantes.

$$\hat{\underline{x}}_{k|k-1} = \hat{\underline{x}}_{k-1|k-1} + \Gamma_k \cdot \underline{u}_k \qquad \texttt{(Eq.13)}$$

$$P_{k|k-1} = P_{k-1|k-1} + Q \qquad \texttt{(Eq.14)}$$

$$R_k^{\varepsilon} = R + H_k{}^t \cdot P_{k|k-1} \cdot H_k \qquad \texttt{(Eq.15)}$$

$$\underline{\hat{\varepsilon}}_{k|k-1} = \underline{y}_k - H_k.\underline{\hat{x}}_{k|k-1} \qquad (\text{Eq.16})$$

$$K_k^f = P_{k|k-1}.H_k^{\ t}.(R_k^\varepsilon)^{-1} \qquad (\text{Eq.17})$$

$$\underline{\hat{x}}_{k|k} = \underline{\hat{x}}_{k|k-1} + K_k^f.\underline{\hat{\varepsilon}}_{k|k-1} \qquad (\text{Eq.18})$$

$$P_{k|k} = P_{k|k-1} - K_k^f.R_k^\varepsilon.(K_k^f)^t \qquad (\text{Eq.19})$$

Dans l'équation (14), Q représente la matrice de covariance des évolutions non anticipées $\underline{w}_k$ du profil polaire, et est évaluable, par exemple en considérant les évolutions du profil comme présentant un bruit blanc d'écart type constant $\sigma_w$ permettant de définir Q comme valant $\sigma_w^2.I_m$ avec $I_m$ la matrice identité de taille *m*.

Une valeur typique de $\sigma_w$ pour un film de 10 um d'épaisseur simple est par exemple 0,02 um, à moduler essentiellement en fonction de la stabilité de la bulle.

Dans l'équation (15), R représente la matrice de covariance du bruit de mesure $\underline{v}_k$, et est évaluable, par exemple en considérant le bruit comme un bruit blanc d'écart type constant $\sigma_v$ permettant de définir R comme valant $\sigma_v^2.I_n$ avec $I_n$ la matrice identité de taille *n*.

Une valeur typique de $\sigma_v$ pour un film de 10 um d'épaisseur simple est par exemple 0,2 um.

Au lieu d'utiliser l'équation (17) et l'inverse de *Rk*, on peut préférer utiliser un solveur de l'équation $K_k^f.R_k^\varepsilon = P_{k|k-1}.H_k^{\ t}$, méthode plus économe en calculs.

Dans l'équation (19), la matrice de covariance de l'erreur d'estimation $P_{k|k}$ de la matrice de covariance de $\underline{x}_k$ est mis à jour pour l'itération suivante.

Dans les calculs itératifs décrits ci-dessus, les valeurs d'initialisation nécessaires sont calculées à partir de la première observation $\underline{y}_0$, c'est-à-dire à partir d'un premier profil transversal mesuré.

Ainsi, on définit le vecteur $\underline{x}_0$ de l'état caché à la première itération comme un vecteur de *m* composantes toutes identiques valant chacune la moitié de l'épaisseur sommée moyenne du premier profil transversal mesuré.

En d'autres termes, on initialise le profil d'épaisseur simple par un profil plat présentant une épaisseur constante valant la moitié de l'épaisseur sommée moyenne du premier profil transversal mesuré.

Alternativement, on peut définir le vecteur $\underline{x}_0$ de l'état caché à la première itération comme un vecteur de *m* composantes chacune définies comme la moitié d'une valeur du premier profil transversal mesuré à la position transversale la plus proche de la position polaire discrète correspondante.

Ainsi, pour définir chaque composante j du vecteur $\underline{x}_0$, on peut sélectionner parmi les couples ( $w_i^{sup}$ ; $p_i$), (1 - $w_i^{sup}$, $p_i$ + 1), ( $w_i^{inf}$, $q_i$) et ( $1 - w_i^{inf}$, $q_i$ + 1) de l'équation 8 celui dont le premier membre est le plus grand pour le second membre ayant la valeur de j considérée, puis sélectionner la valeur FLATPF[i] correspondante du premier profil transversal mesuré, la diviser par deux et assigner la valeur obtenue à la composante j de $\underline{x}_0$.

On définit en outre la matrice de covariance $P_0$ de l'estimateur initial de la covariance de $\underline{x}_k$ comme le produit d'une matrice identité de taille m par la moitié de la variance de la première observation $\underline{y}_0$.

Cette valeur $P_0$ est une donnée conditionnant la vitesse de convergence du système, et une estimation plus précise est possible par étude statistique des profils de départ.

Les premières itérations de l'algorithme ci-dessus servent principalement à converger vers une estimation stabilisée de $\underline{x}_k$ qui correspond à un profil d'épaisseur moyenné sur l'ensemble des premiers profils mesurés.

Le critère de détermination indiquant que le système a convergé est le suivant.

On calcule l'écart-type statistique sur les coordonnées du profil d'erreur résiduelle après correction $\sigma(\varepsilon_{k|k})$ qui vaut $\sigma(\underline{y}_k - H_k.\underline{\hat{x}}_{k|k})$, puis on le compare à un seuil indicatif de la stabilité du procédé pour décider que le système a convergé vers une approximation correcte du profil polaire moyen.

Le seuil est déterminé par un opérateur humain qui prend en compte les expériences passées d'application du filtre de Kalman au système de fabrication du film bulle.

Lorsque $\sigma(\varepsilon_{k|k})$ est inférieur à ce seuil, l'erreur résiduelle est considérée comme étant due à des variations transitoires dans le temps du profil polaire, engendrées par des variations non maîtrisées.

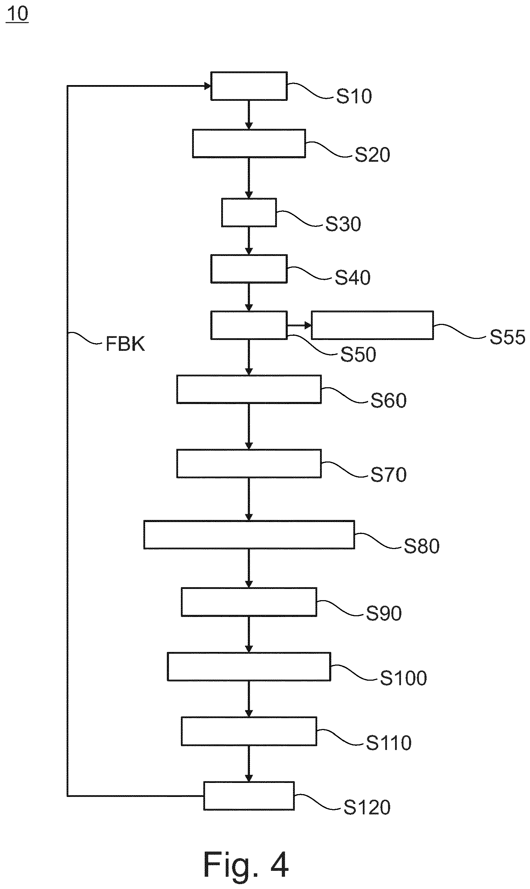

En pratique le procédé de fabrication selon le présent mode de mise en œuvre suit les étapes suivantes, comme illustré par le diagramme 10 de la figure 4 qui correspond au suivi d'une portion du film extrudé, étant entendu qu'il s'agit d'un procédé continu et que chaque étape se répète, en parallèle avec les autres pour d'autres portions du film.

A une première étape S10, le film bulle F est formé par extrusion d'un ou plusieurs matériaux polymères à travers la filière D de manière à obtenir un film ayant une forme tubulaire, le film pouvant être simple couche ou multicouche.

A une seconde étape S20, de l'air insufflé sous pression par le dispositif de soufflage Blow dans le film tubulaire amène à la formation d'une bulle, le film étant ensuite aplati par les rouleaux Rol-1 au cours d'une étape S30 de manière à former une structure bicouche.

A une étape S40, les rouleaux Rol-2 entraînent le film aplati jusqu'au système de mesure MES.

A une étape S50, le système de mesure MES acquiert un profil transversal d'épaisseur de la structure bicouche Bi formée par le film aplati dans sa direction transversale et, simultanément pour chaque point i d'acquisition de l'épaisseur repéré par une position transversale normalisée $x_i$, une position angulaire $\alpha_i$ de la filière en rotation.

A une étape S60, le calculateur CALC détermine la position angulaire $\alpha_i^{\Gamma}$ de pliage à partir de la position angulaire $\alpha_i$ de la filière en rotation.

Les données obtenues aux étapes S50 et S60 sont stockées dans la mémoire MEM, et peuvent par exemple être représentées sous la forme du tableau TAB1 de la figure 3A.

Des profils transversaux d'épaisseurs sont acquis successivement, chaque profil ayant son propre tableau de valeurs, et chaque profil transversal servant à mettre à jour une version estimée du profil polaire d'épaisseur selon la méthode du filtre de Kalman.

Dans le cas particulier d'un début d'opérations, le filtre de Kalman est initialisé au cours d'une étape S55, à partir d'un premier profil transversal d'épaisseur, selon les principes et données décrits plus haut.

Les profils transversaux suivants serviront chacun à une nouvelle itération du filtre.

A une étape S70, sur la base de la position angulaire $\alpha_i^{\Gamma}$ de la filière correspondant à chaque point i d'acquisition du profil d'épaisseur, de position transversale x; dans le film, le calculateur CALC détermine les deux positions polaires $\alpha_i^{sup}$ et $\alpha_i^{inf}$ de la périphérie du film tubulaire.

A une étape S80, le calculateur détermine des valeurs d'angles discrétisées encadrant les positions polaires $\alpha_i^{sup}$ et $\alpha_i^{inf}$ pour chaque point i de mesure, et les enregistre dans la mémoire MEM, à la ligne i aux colonnes Col. 5 et Col.6 du tableau TAB1 de la figure 3A, respectivement.

Il est à noter que déterminer les valeurs d'angles discrétisés est équivalent à déterminer les indices pi et $q_i$ les identifiant, ces grandeurs étant directement reliées par la résolution angulaire choisie.

A une étape S90, le calculateur calcule les coefficients $w_i^{sup}$ et $w_i^{inf}$ qui relient par interpolation le profil polaire *polpf* au profil polaire discrétisé *POLPF,* sur la base des valeurs d'angle discrétisées obtenues à l'étape S80 et à partir des équations (Eq.6) et (Eq.7), à chaque point i de mesure pour chacune des positions polaires $\alpha_i^{sup}$ et $\alpha_i^{inf}$.

Les coefficient $w_i^{sup}$ et $w_i^{inf}$ sont enregistrés respectivement aux colonnes Col.7 et Col.8 à la ligne i du tableau TAB1.

A une étape S100, le calculateur détermine la matrice d'observation $H_k$ du filtre de Kalman à partir du système d'équations linéaires défini par l'équation (Eq.8), et qui relie le profil polaire d'épaisseur simple recherché au profil transversal d'épaisseur de la structure bicouche formée par le film aplati mesuré à l'étape S50.

A une étape S110, et en considérant le calcul du filtre de Kalman déjà initialisé, on calcule une mise à jour de l'estimateur $\hat{\underline{x}}_{k|k}$ qui représente une estimation du vecteur $\underline{x}_k$ et donc du profil polaire *POLPF* d'épaisseur simple, ainsi qu'une mise à jour de la matrice de covariance de l'erreur d'estimation $P_{k|k}$, ces données étant stockées dans la mémoire MEM.

A l'issu de l'étape S110, on a une estimation du profil polaire *POLPF* représenté par le vecteur $\underline{x}_k$ qui bénéficie de la connaissance du dernier profil transversal obtenu, et qui est stocké dans la mémoire MEM sous forme d'un tableau TAB2 à deux colonnes définissant le profil polaire *POLPF* courant, comme illustré sur la figure 3B.

Une première colonne Col.1 de TAB2 indique les indices j identifiant la position polaire considérée du profil polaire.

Une seconde colonne Col.2 de TAB2 indique l'épaisseur simple du film à cette position polaire d'indice j, cette épaisseur ayant la valeur du $j^{ème}$ élément $\underline{x}_k(j)$ mis à jour du vecteur $\underline{x}_k$.

A une étape S120, le calculateur CALC opère une comparaison entre le profil polaire *POLPF* courant et un profil-cible $\underline{x}_{target}$ établi par un opérateur, en calculant, dans ce mode de réalisation, la différence entre $\underline{x}_{target}$ et $\underline{x}_k$ pour chacune de leurs coordonnées.

A une étape FBK, le système de contrôle/commande C/C commande l'appareillage de formation du film en réponse à cette comparaison, suite à des réglages manuels par un opérateur ou automatiquement par une boucle de rétrocontrôle liant le système de contrôle/commande à l'appareillage de formation du film, par exemple aux actuateurs ACT de la filière.

Le pilotage des actuateurs correspond au vecteur $\underline{u}_k$ utilisé en entrée du filtre de Kalman.

On contrôle ainsi l'épaisseur simple du film au niveau de la filière en fonction du profil polaire estimé à partir de mesures d'épaisseur sommée du film bulle aplati.

Bien que ce mode de réalisation expose une solution technique à la formation d'un film basée sur le contrôle de l'épaisseur de ce dernier, l'invention s'étend à un contrôle basé sur toute autre grandeur caractéristique additive alternative considérée comme pertinente par le praticien.

### Description d'un second mode de mise en oeuvre du procédé selon l'invention

Dans ce second mode de mise en oeuvre, on considère un procédé de fabrication d'un film bulle au moyen d'une filière suivant un mouvement de rotation pendulaire.

Il est alors nécessaire de prendre en compte, en plus du sens de rotation de la filière, un phénomène de déphasage périodique intervenant à chaque changement du sens de rotation de la filière et jusqu'à établissement d'un régime stationnaire.

Ce déphasage est dû à l'inertie et à la déformation de la bulle, déformation d'autant plus forte que la bulle est peu gonflée, les effets de l'inertie de la bulle étant difficiles à modéliser lors d'un changement de direction de rotation.

En conséquence, dans le cas d'une rotation pendulaire de la filière, il est difficile d'établir précisément la valeur du décalage à appliquer pour reconstruire correctement le profil d'épaisseur à chaque instant.

En revanche, sur la base de la mesure de profil d'épaisseur d'un film bulle décrite plus haut, il est possible de mettre à profit l'aspect pendulaire de la rotation de la filière pour déterminer précisément le décalage $\alpha_{shift}$ s'appliquant lorsque la rotation de la bulle est dans un domaine stationnaire.

Le principe est de procéder à deux reconstructions de profils polaires d'épaisseur en parallèle, dits « profils parallèles », à l'aide de deux filtres de Kalman auxiliaires et sans introduire de décalage : l'un de ces profils parallèles est reconstitué à partir des données obtenues pour un sens positif de rotation de la filière tandis que l'autre profil parallèle est reconstitué à partir des données obtenues pour un sens négatif de rotation de la filière.

Ainsi, pour des profils parallèles reconstitués sur un intervalle de temps suffisamment court pour que d'importantes variations de profils ne soient pas introduites dans le film, on obtient deux profils polaires similaires pour, respectivement, des sens de rotation positif et négatif, *POLPF*($+\alpha_{shift}$) et *POLPF*($-\alpha_{shift}$) décalés l'un d'un décalage de valeur $+\alpha_{shift}$ et l'autre d'un décalage de valeur $-\alpha_{shift}$ par rapport à un profil qui tiendrait compte de ces décalages.

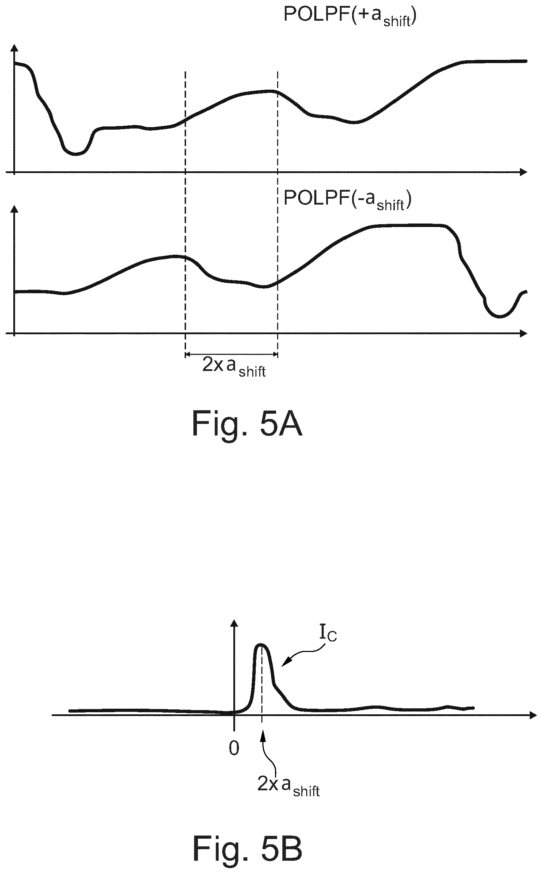

La figure 5A illustre des tels profils parallèles, similaires sinon qu'ils sont décalés l'un de l'autre d'une valeur angulaire de $2\times\alpha_{shift}$.

La détermination du maximum de la courbe IC d'intercorrélation entre les profils parallèles *POLPF*($+\alpha_{shift}$) et *POLPF*($-\alpha_{shift}$) de la figure 5A, par exemple par régression parabolique, permet de déterminer le décalage angulaire $2\times\alpha_{shift}$ entre ces deux profils, comme illustré par la figure 5B.

La division par 2 de ce décalage donne la valeur de décalage angulaire $\alpha_{shift}$ de correction qu'il est possible d'introduire au niveau des données d'entrée d'un filtre de Kalman principal pour mettre à jour l'estimation d'un profil polaire selon le premier mode de mise en œuvre.

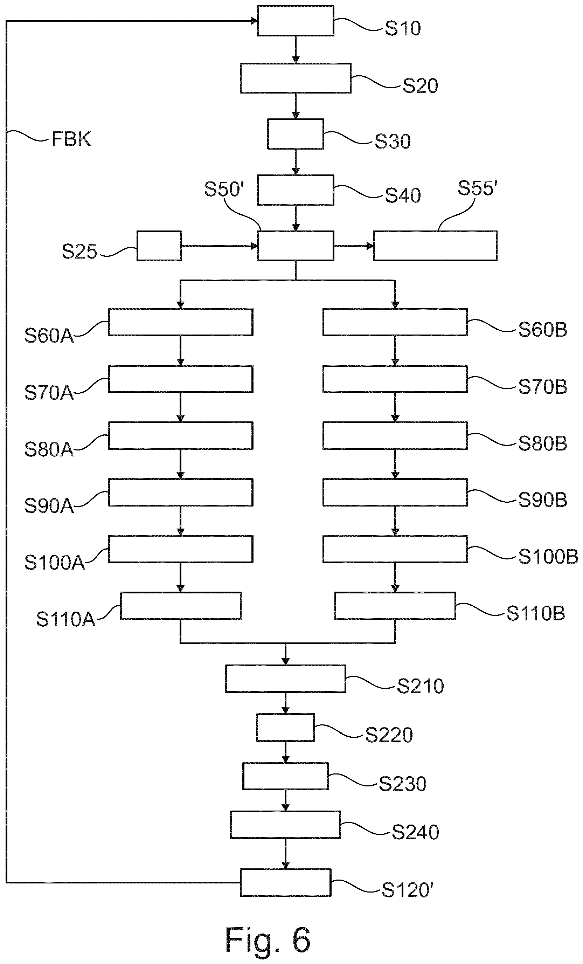

Le diagramme 20 de la figure 6 illustre le procédé de fabrication d'un film bulle selon le deuxième mode de mise en œuvre.

En ce qui concerne les étapes numérotées de la même manière que dans le diagramme 10, on peut se reporter au premier mode de mise en œuvre.

Le second mode de mise en œuvre se distingue du premier mode de mise en œuvre sur les points suivants.

Au moment de l'étape S50' de mesure du profil d'épaisseur sommée du film aplati, l'indicateur d'angle ANG envoie, en plus d'une position angulaire, un signal indicatif du sens de rotation de la filière au système de mesure MES au cours d'une étape S25, ce qui permet la détermination du sens de rotation du film.

Alternativement, si la rotation du film bulle était assurée par une rotation d'un panneau de repliement, il pourrait s'agir de sens de rotation de ce panneau de repliement.

Toujours alternativement, on peut déterminer le sens de rotation du film (engendré par la rotation de la filière ou du panneau de repliement) à partir de l'étude du sens du balayage du capteur et de l'évolution de l'angle indiqué.

En réponse à la détermination du sens de rotation du film, le système de mesure MES traite les données acquises en parallèle selon un procédé reposant sur l'emploi des deux filtres de Kalman auxiliaires, comprenant les étapes S60A à S100A et S60B à S100B respectivement équivalentes aux étapes S60 à S100 du premier mode de mise en œuvre.

Plus spécifiquement, les profils transversaux obtenus lors d'une période de rotation de sens positif sont traités à part, séparément des profils transversaux obtenus lors d'une période de rotation de sens de négatif, selon les étapes S60A à S110A comme dans le premier mode de mise en œuvre.

De même, les profils transversaux obtenus lors d'une période de rotation de sens négatif sont traités à part, séparément des profils transversaux obtenus lors d'une période de rotation de sens positif, selon les étapes S60B à S110B comme dans le premier mode de mise en œuvre.

Ainsi, deux profils polaires parallèles d'épaisseur du film sont mis à jour alternativement, sans correction liée au décalage recherché, et donc décalés angulairement de $2\times\alpha_{shift}$ l'un par rapport à l'autre.

Une étape d'initialisation S55' consiste à initialiser deux filtres de Kalman distincts, chacun dédiés à l'un des deux profils parallèles, de manière similaire à l'étape S55 du premier mode de mise en œuvre.

Au cours d'une étape S210, le calculateur CALC calcule la courbe d'intercorrélation des deux profils polaires parallèles.

Au cours d'une étape S220, le calculateur CALC détermine la position du maximum de cette courbe d'intercorrélation, puis divise la valeur angulaire de cette position par deux pour obtenir le décalage angulaire de correction $\alpha_{shift}$.

Au cours d'une étape S230, le calculateur CALC applique une correction par ledit décalage angulaire de correction au profil transversal courant, c'est-à-dire au dernier profil transversal acquis.

Plus spécifiquement, la correction consiste en l'application d'un décalage, positif ou négatif et d'une amplitude égale au décalage angulaire de correction obtenu à l'étape S220, à l'angle de pliage du point d'acquisition d'épaisseur de l'étape S50 pour le profil transversal courant : l'angle de pliage d'un point du film dont l'épaisseur est obtenue lors d'une rotation de sens positif est décalée de $-\alpha_{shift}$ alors que l'angle de pliage d'un point du film dont l'épaisseur est obtenue lors d'une rotation de sens négatif est décalée de $+\alpha_{shift}$.

La correction peut être appliquée à la position angulaire de l'organe de génération de rotation avant détermination de l'angle de pliage à partir de cette position corrigée, ou bien directement à l'angle de pliage.

Au cours d'une étape S240, le calculateur CALC alimente un filtre de Kalman principal avec les profils transversaux de positions angulaires corrigées, les profils transversaux obtenus pendant une rotation de sens négatif ainsi que les profils transversaux obtenus pendant une rotation de sens positif et à l'exception des profils contenant un retournement de rotation, de manière à obtenir un profil polaire principal d'épaisseur du film, selon les étapes S50 à S110 du premier mode de réalisation.

A une étape S120', le calculateur CALC opère une comparaison entre le profil polaire principal courant et un profil-cible établi par un opérateur, de façon similaire à la comparaison de l'étape S120 du premier mode de mise en œuvre.

A une étape FBK, le système de contrôle/commande C/C commande l'appareillage de formation du film en réponse à cette comparaison, suite à des réglages manuels par un opérateur ou automatiquement par une boucle de rétrocontrôle liant le système de contrôle/commande à l'appareillage de formation du film, par exemple aux actuateurs ACT de la filière.

Il est à noter que, comme dans le premier mode de mise en oeuvre, la rotation de la position de pliage du film peut être assurée par un panneau de repliement ou tout autre organe de génération de rotation, auquel cas la position angulaire à considérer est celle de cet organe de génération de rotation.

Il va de soi que la présente invention ne saurait être limitée aux modes de réalisation exposés plus haut, susceptibles de subir des modifications sans pour autant sortir du cadre de l'invention.

## Revendications

1. Procédé de fabrication d'un film bulle (F) au moyen d'un appareillage de formation de film, procédé comprenant une étape (S10) de formation du film bulle par extrusion à travers une filière (D), une étape (S30) d'aplatissement du film bulle à un angle de pliage variant par entraînement d'un organe de génération de rotation, une étape (S50) de mesure d'un profil transversal d'une grandeur additive caractéristique du film bulle qui est sommée sur deux portions juxtaposées d'une paroi du film bulle aplati, une étape d'estimation d'un profil polaire discrétisé de ladite grandeur additive caractéristique du film bulle sur la base du profil transversal, et une étape de commande de l'appareillage de formation de film en réponse à l'estimation du profil polaire discrétisé du film bulle, dans lequel, pour chaque point de mesure du profil transversal, dans le système de mesure :

   - on acquiert (S50) une position angulaire ($\alpha_i$) de l'organe de génération de rotation ;

- à partir de cette position angulaire, et pour une position transversale ($x_i$) du point de mesure concerné, on détermine (S70) deux positions polaires ( $\alpha_i^{sup}$ , $\alpha_i^{inf}$ ) de la périphérie du film bulle aplati qui se situent à cette position transversale ;
- pour chacune des deux positions polaires, on détermine (S80) deux valeurs d'angles discrétisées encadrant la position polaire considérée ; **caractérisé en ce que**
- à partir desdites valeurs d'angles discrétisées, on calcule (S90) des coefficients d'interpolation ( $w_i^{sup}$ , $w_i^{inf}$ ) qui lient un profil polaire du film audit profil polaire discrétisé du film, **et en ce que**
- à partir desdits coefficients d'interpolation, on détermine (S100) une matrice d'observation d'un filtre de Kalman principal ; et
- on fait (S110) une mise à jour de l'estimation du profil polaire discrétisé du film au moyen de ce filtre de Kalman principal, dans lequel on entre le profil transversal acquis à l'étape de mesure (S50).

**2.** Le procédé de fabrication d'un film bulle selon la revendication 1, **caractérisé en ce que,** pour une première itération du filtre de Kalman principal, on initialise (S55) le profil polaire discrétisé par un profil plat présentant une valeur constante valant une moitié de ladite grandeur additive caractéristique sommée moyennée sur un premier profil transversal mesuré.

**3.** Le procédé de fabrication d'un film bulle selon la revendication 1, **caractérisé en ce que,** pour une première itération du filtre de Kalman principal, on initialise (S55) le profil polaire discrétisé par un profil de composantes chacune définies comme une moitié d'une valeur d'un premier profil transversal mesuré à une position transversale la plus proche d'une position polaire discrète de la composante considérée.

**4.** Le procédé de fabrication d'un film bulle selon la revendication 1 ou 2, **caractérisé en ce que,** en réponse à la mise à jour de l'estimation du profil polaire discrétisé du film, on commande (S120 ; S120') des actuateurs de régulation de formation du film bulle.

**5.** Le procédé de fabrication d'un film bulle selon l'une quelconque des revendications précédentes, **caractérisé en ce que** la rotation est une rotation pendulaire, et **en ce que** :

- on estime deux profils polaires discrétisés de la grandeur additive caractéristique du film bulle en parallèle à partir d'une pluralité de profils transversaux de la grandeur additive caractéristique acquis par mesures sur le film bulle, un profil polaire discrétisé pour chaque sens de rotation, en utilisant deux filtres de Kalman auxiliaires chacun dédié à l'un de ces deux profils polaires, selon le procédé de la revendication 1 ;
- on calcule (S210) une courbe d'intercorrélation de ces deux profils polaires ;
- on détermine (S220) une position du maximum de cette courbe d'intercorrélation que l'on divise par deux pour obtenir un décalage angulaire de correction ; et
- on détermine (S240) la mise à jour de l'estimation du profil polaire discrétisé du film en alimentant ledit filtre de Kalman principal avec le profil transversal corrigé.

**6.** Le procédé de fabrication d'un film bulle selon l'une quelconque des revendications précédentes, **caractérisé en ce que** ladite grandeur additive caractéristique est une épaisseur, ledit profil polaire étant un profil polaire d'épaisseur du film et ledit profil polaire discrétisé un profil polaire discrétisé d'épaisseur du film.

**Patentansprüche**

**1.** Verfahren zum Herstellen einer Blasenfolie (F) mittels einer Folienbildungsvorrichtung, wobei das Verfahren einen Schritt (S10) des Bildens der Blasenfolie durch Extrusion durch eine Düse (D), einen Schritt (S30) des Abflachens der Blasenfolie auf einen variierenden Faltwinkel durch Antreiben eines Rotationserzeugungsorgans, einen Schritt (S50) des Messens eines Querprofils einer für die Blasenfolie charakteristischen additiven Größe, die auf zwei nebeneinander liegenden Abschnitten einer Wand der abgeflachten Blasenfolie summiert wird, einen Schritt des Schätzens eines diskretisierten Polprofils der charakteristischen additiven Größe der Blasenfolie auf der Basis des Querprofils, und einen Schritt des Steuerns der Folienbildungsvorrichtung als Reaktion auf die Schätzung des diskretisierten Polprofils der Blasenfolie umfasst, wobei für jeden Messpunkt des Querprofils in dem Messsystem:

- eine Winkelposition ($\alpha_i$) des Rotationserzeugungsorgans erfasst (S50) wird;
- aus dieser Winkelposition und für eine Querposition ($x_i$) des betreffenden Messpunktes zwei Polpositionen ($\alpha_i^{sup}$, $\alpha_i^{inf}$) des Umfangs der abgeflachten Blasenfolie bestimmt (S70) werden, die an dieser Querposition liegen;
- für jede der beiden Polpositionen zwei diskretisierte Winkelwerte bestimmt (S80) werden, welche die betreffende Polposition einrahmen;

**dadurch gekennzeichnet, dass**

- aus den diskretisierten Winkelwerten Interpolationskoeffizienten ($w_i^{sup}$, $w_i^{inf}$) berechnet (S90) werden, die ein Polprofil der Folie mit dem diskretisierten Polprofil der Folie verbinden, **und dass**
- aus den Interpolationskoeffizienten eine Beobachtungsmatrix eines Kalman-Hauptfilters bestimmt (S100) wird; und
- eine Aktualisierung (S110) der Schätzung des diskretisierten Polprofils der Folie mittels dieses Kalman-Hauptfilters durchgeführt wird, in die das in dem Messschritt (S50) erfasste Querprofil eingegeben wird.

2. Verfahren zum Herstellen einer Blasenfolie nach Anspruch 1,
**dadurch gekennzeichnet, dass** für eine erste Iteration des Kalman-Hauptfilters das diskretisierte Polprofil durch ein flaches Profil initialisiert (S55) wird, das einen konstanten Wert aufweist, der eine Hälfte der summierten charakteristischen additiven Größe, die über ein erstes gemessenes Querprofil gemittelt wird, ausmacht.

3. Verfahren zum Herstellen einer Blasenfolie nach Anspruch 1,
**dadurch gekennzeichnet, dass** für eine erste Iteration des Kalman-Hauptfilters das diskretisierte Polprofil durch ein Profil von Komponenten initialisiert (S55) wird, die jeweils als eine Hälfte eines Wertes eines ersten Querprofils definiert sind, das an einer Querposition gemessen wird, die am nächsten zu einer diskreten Polposition der betreffenden Komponente liegt.

4. Verfahren zum Herstellen einer Blasenfolie nach Anspruch 1 oder 2, **dadurch gekennzeichnet, dass** als Reaktion auf die Aktualisierung der Schätzung des diskretisierten Polprofils der Folie Aktuatoren zur Regulierung der Bildung der Blasenfolie gesteuert (S120; S120') werden.

5. Verfahren zum Herstellen einer Blasenfolie nach einem der vorstehenden Ansprüche, **dadurch gekennzeichnet, dass** die Rotation eine Pendelrotation ist, und **dass:**

- zwei diskretisierte Polprofile der charakteristischen additiven Größe der Blasenfolie parallel aus einer Vielzahl von Querprofilen der charakteristischen additiven Größe geschätzt werden, die durch Messungen an der Blasenfolie erfasst wurden, ein diskretisiertes Polprofil für jede Rotationsrichtung, unter Verwendung von zwei Kalman-Hilfsfiltern, die jeweils einem dieser beiden Polprofile zugewiesen sind, gemäß dem Verfahren nach Anspruch 1;
- eine Kreuzkorrelationskurve dieser beiden Polprofile berechnet (S210) wird;
- eine Position des Maximums dieser Kreuzkorrelationskurve bestimmt (S220) wird, die durch zwei geteilt wird, um eine Korrekturwinkelverschiebung zu erhalten; und
- die Aktualisierung der Schätzung des diskretisierten Polprofils der Folie bestimmt (S240) wird, indem das korrigierte Querprofil in den Kalman-Hauptfilter eingespeist wird.

6. Verfahren zum Herstellen einer Blasenfolie nach einem der vorstehenden Ansprüche, **dadurch gekennzeichnet, dass** die charakteristische additive Größe eine Dicke ist, wobei das Polprofil ein Polprofil der Dicke der Folie ist und das diskretisierte Polprofil ein diskretisiertes Polprofil der Dicke der Folie ist.

**Claims**

1. A method for manufacturing a bubble wrap film (F) by means of a film-forming apparatus, the method comprising a step (S10) of forming the bubble wrap film by extrusion through a nozzle (D), a step (S30) of flattening the bubble wrap film with a variable bend angle by driving a rotation generating member, a step (S50) of measuring a transverse profile of a characteristic additive quantity of the bubble wrap film totaled over two juxtaposed portions of a wall of the flattened bubble wrap film, a step of estimating a discretized polar profile of said characteristic additive quantity of the bubble wrap film on the basis of the transverse profile, and a step of controlling the film-forming apparatus in response to the estimation of the discretized polar profile of the bubble wrap film, wherein, for each measurement point of the transverse profile, in the measurement system:

- an angular position ($\alpha_i$) of the rotation generating member is acquired (S50);
- on the basis of this angular position, and for a transverse position ($x_i$) of the measurement point in question, two polar positions ( $\alpha_i^{sup}$, $\alpha_i^{inf}$ ) of the periphery of the flattened bubble wrap film which are located at this transverse position are determined (S70);
- for each of the two polar positions, two discretized values of angles flanking the polar position in question are determined (S80); **characterized in that**
- on the basis of said discretized values of angles, coefficients of interpolation ( $w_i^{sup}$, $w_i^{inf}$ ) that link a polar profile of the film to said discretized polar profile of the film are calculated (S90), **and in that**
- on the basis of said coefficients of interpolation, an observation matrix of a main Kalman filter is determined (S100); and
- the estimation of the discretized polar profile of the film is updated (S110) by applying this main Kalman filter, into which the transverse profile acquired at the measuring step (S50) is entered.

2. The method for manufacturing a bubble wrap film according to claim 1, **characterized in that,** for a first iteration of the main Kalman filter, the discretized polar profile is initialized (S55) by a planar profile having a constant value equal to one half of said totaled characteristic additive quantity averaged over a first measured transverse profile.

3. The method for manufacturing a bubble wrap film according to claim 1, **characterized in that,** for a first iteration of the main Kalman filter, the discretized polar profile is initialized (S55) by a profile of components, each of which is defined as one half of a value of a first transverse profile measured at a transverse position closest to a discrete polar position of the component in question.

4. The method for manufacturing a bubble wrap film according to claim 1 or 2, **characterized in that** actuators for regulating the formation of the bubble wrap film are controlled (S120; S120') in response to the update to the estimation of the discretized polar profile of the film.

5. The method for manufacturing a bubble wrap film according to any of the preceding claims, **characterized in that** the rotation is a pendular rotation, and **in that:**

- two discretized polar profiles of the characteristic additive quantity of the bubble wrap film are estimated simultaneously on the basis of a plurality of transverse profiles of the characteristic additive quantity acquired by measurements on the bubble wrap film, one discretized polar profile for each rotation direction, by using two auxiliary Kalman filters, each of which is dedicated to one of these two polar profiles, according to the method of claim 1;
- an intercorrelation curve of these two polar profiles is calculated (S210);
- a position of the maximum of this intercorrelation curve is determined (S220) and divided by two so as to obtain a correction angular offset; and
- the update to the estimation of the discretized polar profile of the film is determined (S240) by supplying said main Kalman filter with the corrected transverse profile.

6. The method for manufacturing a bubble wrap film according to any of the preceding claims, **characterized in that** said characteristic additive quantity is a thickness, said polar profile being a polar profile of film thickness, and said discretized polar profile being a discretized polar profile of film thickness.

Fig. 1

Fig. 2A

Fig. 2B

Fig. 2C

TAB1

| Col.1 | Col.2 | Col.3 | Col.4 | Col.5 | Col.6 | Col.7 | Col.8 |
|---|---|---|---|---|---|---|---|
| 0 | $CT_0$ | $a_0$ | $a_0^G$ | $a_0^{sup}$ | $a_0^{inf}$ | $w_0^{sup}$ | $w_0^{inf}$ |
| 1 | $CT_1$ | $a_1$ | $a_1^G$ | $a_1^{sup}$ | $a_1^{inf}$ | $w_1^{sup}$ | $w_1^{inf}$ |
| 2 | $CT_2$ | $a_2$ | $a_2^G$ | $a_2^{sup}$ | $a_2^{inf}$ | $w_2^{sup}$ | $w_2^{inf}$ |

$\vdots$

| i-1 | $CT_{i-1}$ | $a_{i-1}$ | $a_{i-1}^G$ | $a_{i-1}^{sup}$ | $a_{i-1}^{inf}$ | $w_{i-1}^{sup}$ | $w_{i-1}^{inf}$ |
|---|---|---|---|---|---|---|---|
| i | $CT_i$ | $a_i$ | $a_i^G$ | $a_i^{sup}$ | $a_i^{inf}$ | $w_i^{sup}$ | $w_i^{inf}$ |
| i+1 | $CT_{i+1}$ | $a_{i+1}$ | $a_{i+2}^G$ | $a_{i+2}^{sup}$ | $a_{i+1}^{inf}$ | $w_{i+1}^{sup}$ | $w_{i+1}^{inf}$ |

$\vdots$

| n-1 | $CT_{n-1}$ | $a_{n-1}$ | $a_{n-1}^G$ | $a_{n-1}^{sup}$ | $a_{n-1}^{inf}$ | $w_{n-1}^{sup}$ | $w_{n-1}^{inf}$ |
|---|---|---|---|---|---|---|---|

# Fig. 3A

TAB2

| Col.1 | Col.2 |
|---|---|
| 0 | $\underline{x}_k(0)$ |
| 1 | $\underline{x}_k(1)$ |
| 2 | $\underline{x}_k(2)$ |

$\vdots$

| j-1 | $\underline{x}_k(j-1)$ |
|---|---|
| j | $\underline{x}_k(j)$ |
| j+1 | $\underline{x}_k(j+1)$ |

$\vdots$

| m-1 | $\underline{x}_k(m-1)$ |
|---|---|

# Fig. 3B

<u>10</u>

Fig. 4

POLPF($+a_{shift}$)

POLPF($-a_{shift}$)

$2 \times a_{shift}$

# Fig. 5A

$I_C$

0

$2 \times a_{shift}$

# Fig. 5B

Fig. 6

**EP 4 065 333 B1**

**RÉFÉRENCES CITÉES DANS LA DESCRIPTION**

**Documents brevets cités dans la description**

- WO 2016189518 A2
- JP H09225995 A
- US 20110112677 A